# EUROPEAN PATENT APPLICATION

(11) **EP 4 068 538 A1**
(43) Date of publication of application: **05.10.2022**
(21) Application number: 22164628.4
(22) Date of filing: 28.03.2022
(51) Int. Cl.: H02G 3/12, H02G 3/20, H02G 3/00, H02G 3/06, H02G 3/08, H02G 3/16, F21V 23/06, F21V 17/00, F21V 23/00, H01R 9/24, F21S 8/04, F21V 21/03, H01R 13/629

(54) **CONNECTION SYSTEM FOR THE QUICK FASTENING OF A CONNECTOR**

(30) Priority: 29.03.2021 IT 202100007673
(71) Applicant: Wallled S.r.l., 24049 Verdello (BG) (IT)
(72) Inventor: BONFANTI, Gerolamo Angelo, I-23899 Robbiate (LC ) (IT)
(74) Representative: Balsamo, Andrea

(57) **Abstract**

A connection system for the quick fastening of a connector for electrical conductors comprises a quick-fastening connection piece (10) in turn comprising a main body forming a through-channel (12), extending along a first axis (X-X), a connection mechanism for fastening a connector (30) of electrical conductors (31), and a coupling mechanism for the removable connection of the connection piece (10) to a support element (50). The system further comprises a section bar (50) comprising a central body (52) forming an elongated channel (54), a lower seat (60) extending longitudinally along the central body (52) and particularly suitable for receiving a light source, and an anchoring mechanism (70, 72) particularly suitable for engagement with the coupling mechanism of the connection piece (10) in any position along the entire longitudinal extension of the lower seat (60).

## Description

The present invention relates to the sector of lighting systems integrated in building structures and has been developed with particular reference to a connection system for the quick fastening of a connector.

Increasingly more frequently in the lighting sector prefabricated elements, for example plasterboard panels, are used, these being associated with walls and ceilings in a room, but also having a structural function. The light sources are therefore incorporated in these prefabricated elements so as to face the room which they must illuminate.

In these situations, one of the main problems encountered during the installation of the lighting systems is the need to provide the electrical connections necessary for establishing contact between the light sources and a power supply source.

The electrical conductors are often arranged in a random and non-orderly manner and the fixing of the end of an electrical conductor to the light source is often difficult and takes a long time.

The general object of the present invention is to provide a connection system for the quick fastening of connectors or electrical conductors, which makes the installation of a lighting system simpler and, at the same time, more orderly and efficient.

In view of this object the Proprietor has thought to provide, according to the invention, a connection system for the quick fastening of a connector for electrical conductors comprising:
- a quick-fastening connection piece comprising:
- a main body forming a through-channel, extending along a first axis,
- a connection mechanism for fastening a connector of electrical conductors, and
- a coupling mechanism for the removable connection of the connection piece to a support element.
- the system further comprising a section bar comprising:
- a central body forming an elongated channel,
- a lower seat extending longitudinally along the central body and particularly suitable for receiving a light source, and
- an anchoring mechanism particularly suitable for engagement with the coupling mechanism of the connection piece in any position along the longitudinal extension of the lower seat.

Further characteristic features and advantages of the present invention will become clear from the following description, provided by way of example with reference to the attached drawings in which:

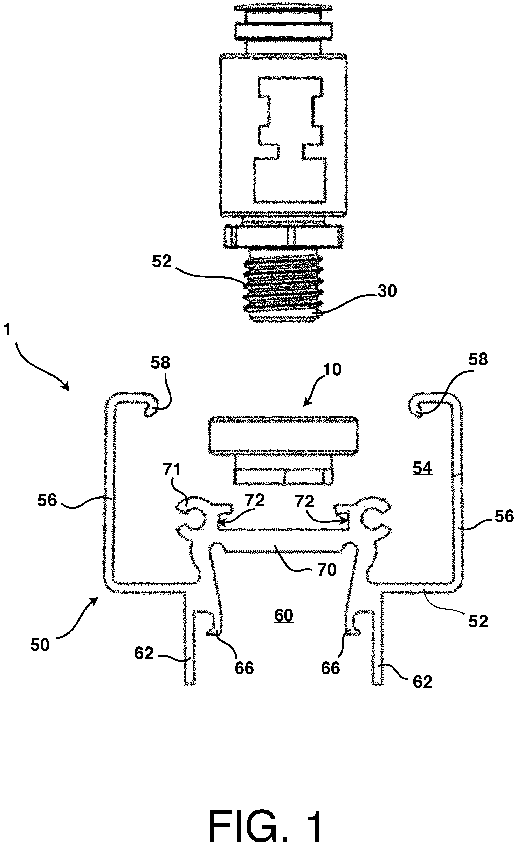

- Figure 1 shows a schematic front view of the connection system according to the present invention;
- Figure 2 shows an axonometric view of a connection piece according to the present invention;
- Figure 3 shows a schematic cross-sectional view of the connection piece of Figure 2;
- Figure 4 shows a view from below of the connection piece of Figure 2;

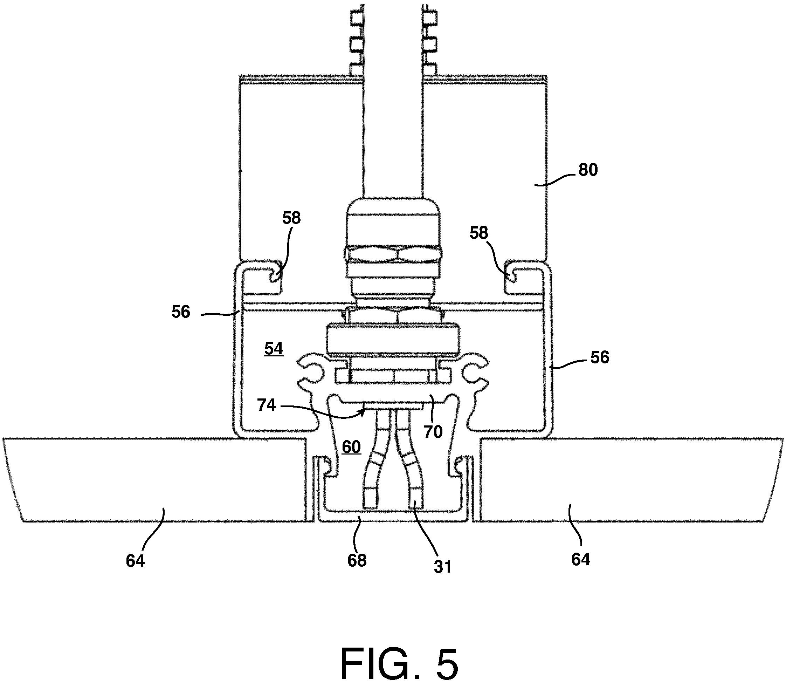

- Figure 5 shows a schematic front view of the connection system of Figure 1 in an operative position thereof; and

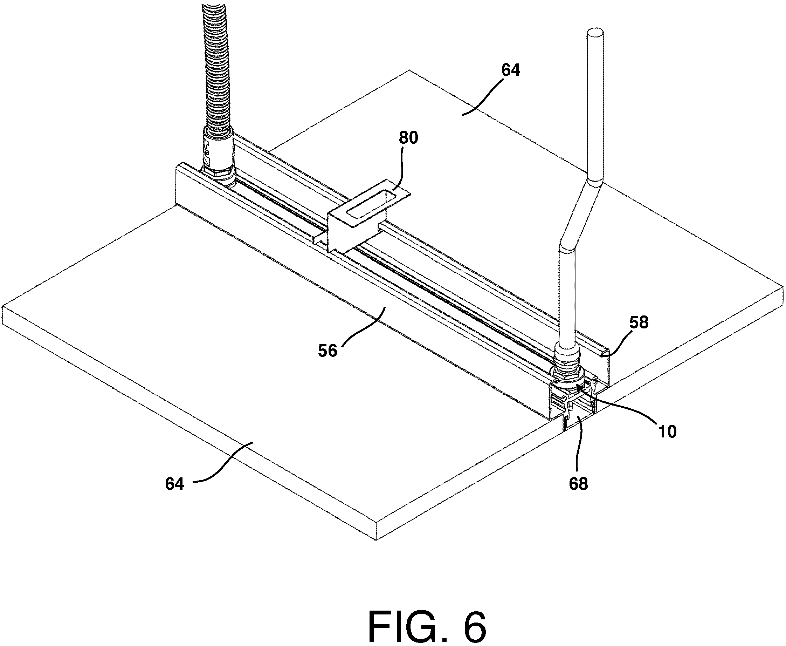

- Figure 6 shows a schematic axonometric view of the connection system of Figure 5.

It is understood that elements or characteristics of one embodiment may be conveniently incorporated in other embodiments without further clarifications.

Reference will now be made in detail to the various embodiments of the invention, one or more examples of which are shown in the attached figures. Each example is provided merely by way of illustration of the invention and is understood as not being a limitation thereof. For example, the technical characteristics shown or described since they form part of an embodiment may be integrated within, or associated with, other embodiments in order to produce a further embodiment. It is understood that the present invention will be inclusive of these modifications and variants.

In a first embodiment of the present invention, the connection system 1 for the quick fastening of connectors comprises a connection piece 10 and a profiled bar or section bar 50.

The connection piece 10 comprises a main body which forms a through-channel 12, extending along a first axis X-X and particularly suitable for receiving the end of a connector 30 of an electrical conductor 31. The connection piece 10 may be made of insulating material or using different materials coated with a layer of insulating substance.

The connection piece 10 comprises a connection mechanism which is particularly suitable for fastening the connector 30. In accordance with one of the possible embodiments of the present invention, the internal surface of the through-channel 12 is provided with a thread 14 particularly suitable for engagement with a thread 52 formed on an external surface of a connector 30 or cable gland and for fixing it to the main body of the connection piece 10.

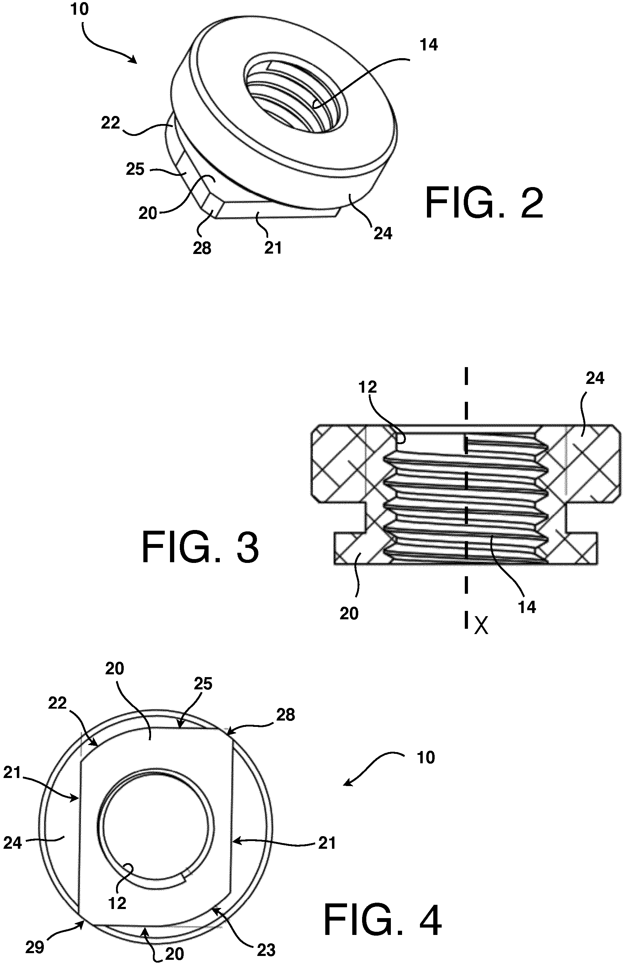

The main body of the connection piece 10 comprises a coupling mechanism for the removable connection of the connection piece 10 to a support element, for example, a section bar 50. In accordance with one of the possible embodiments, the coupling mechanism comprises a base 20 with a substantially polygonal external profile, for example, but not exclusively, a rectangular profile, which has two side walls 21, a front wall 25 and a rear wall 27. The external surface of the base 20 is shaped so as to comprise at least one chamfered angular portion 22, situated between a side wall 21 and a front wall 25 or rear wall 27. Preferably, the external surface of the base 20 comprises at least two chamfered angular portions 22, 23, preferably four chamfered angular portions 22, 23, 28, 29 as shown in Fig. 4.

Obviously, it is also possible to envisage different coupling mechanisms, such as a bayonet joint or a spring-fitting joint or tensioning flanges, without thereby departing from the scope of the present invention.

The main body of the connection piece 10 also comprises a head 24, which is particular suitable, during use, for coming into contact with the end of the connector 30. In accordance with one of the possible embodiments, the head 24 of the connection piece 10 has a substantially cylindrical shape with an outer diameter greater than the outer diameter of the through-channel 12.

The connection system for the quick fastening of connectors also comprises a profiled bar or section bar 50.

The section bar 50 has a central body 52 made, preferably but not exclusively, by means of extrusion. The central body 52 comprises two side walls 56 which form an elongated channel 54. The section bar 50 comprises an upper attachment portion particularly suitable, during use, for connecting the section bar 50 to a plasterboard structure (not shown), for example by means of a fixing element, namely a bracket 80. In accordance with one of the possible embodiments, the upper attachment portion comprises an end 58 of each side wall 56 folded towards the inside of the channel 54.

The section bar 50 comprises a lower seat 60, arranged opposite the upper attachment portion and extending longitudinally along the central body 52. As will become clearer below, inside the lower seat 60 it is possible to insert a light source, for example, but not exclusively, an LED (Light Emitting Diode) strip.

The lower seat 60 is delimited by a pair of lateral ribs 62 arranged parallel to each other and particularly suitable, during use, for allowing plasterboard sheets to be fixed to the section bar 50. Each lateral rib 62 further comprises a coupling portion 66 particularly suitable, during use, for engagement with a protective element for protecting the light source, and/or a diffusion element for diffusing the light emitted by the light source, for example a screen 68.

The lower seat 60 is delimited also by an upper wall 70 on the upper surface of which, namely on the surface facing the channel 54, an anchoring mechanism particularly suitable for engagement with the coupling mechanism of the connection piece 10 is formed. The anchoring mechanism allows the connection piece 10 to be engaged in any position along the longitudinal extension of the lower seat 60.

In accordance with one of the possible embodiments of the present invention, the anchoring mechanism of the lower seat 60 comprises an extruded part 71 extending longitudinally along the central body 52. The extruded part 71 has a C-shaped structure in cross-section, composed of a pair of lateral grooves 72 and the upper wall 70 of the lower seat 60. Owing to this configuration, it is possible to insert the base 20 of the connection piece 10 in any position along the entire longitudinal extension of the lower seat 60.

In accordance with one of the possible embodiments of the present invention, the upper wall 70 comprises one or more through-openings 74 in predetermined positions on the section bar 50 along its longitudinal extension. These through-openings 74 correspond to the positioning points, during use, of the connection piece 10 to which the connector 30 of an electrical conductor 31 is then fastened. The through-openings 74 may be temporarily closed by means of a closing element, namely a cap, in order to prevent, during the preliminary steps for assembly of the structure, machining residue from entering into the channel 54 or falling out of the channel 54 into the environment.

In accordance with another one of the possible embodiments, the upper wall 70 is solid, namely does not have through-openings. According to this configuration, during use, during the installation of the connection system according to the present invention, the installation engineer may form, for example using a drill, one or more through-openings 74 in the upper wall 70, in the position where the connector 30 of an electrical conductor 31 is to be rapidly fixed.

During use, beforehand or once the section bar 50 has been installed in the building structure, one or more through-openings 74 are formed in the upper wall 70 of the lower seat 60 of the section bar 50, in the position, or positions, in which the connector 30 of an electrical conductor 31 is to be rapidly fixed.

Then a connection piece 10 is positioned opposite each through-opening 72 so that the through-channel 12 and the through-opening 72 are axially aligned with each other. In order to be able to join the coupling mechanism of the connection piece 10 together with the anchoring mechanism of the section bar 50, the coupling mechanism of the connection piece 10 must be in a first operative position. In accordance with one of the possible embodiments shown in the attached figures, in the first operative position the side walls 21 of the base 20 must be parallel with the walls of the lateral grooves 72 of the extruded part 71 so as to be able to insert the connection piece 10 inside the extruded part 71.

Then the coupling mechanism of the connection piece 10 is arranged in a second operative position where it is engaged with the anchoring mechanism of the section bar 50. In accordance with one of the possible embodiments, the coupling mechanism of the connection piece 10 is arranged in a second operative position and at the same time the connector 30 of an electrical conductor 31 is connected to the connection piece 10.

With particular reference to the attached figures, the threaded end of the connector 30 is screwed onto the thread 14 inside the through-channel 12 of the connection piece 10. Consequently, the connection piece 10 is rotated until the at least one chamfered portion 22 of the base 20 comes into contact with the lateral grooves 72 of the extruded part 70, locking the connection piece 10 inside the extruded part 70. Continuing screwing of the connector 30 onto the connection piece 10, the end of the connector 30 comes into contact against the head 24 of the connection piece 10, thereby stably fixing together the connector 30, the connection piece 10 and the section bar 50.

Once the electrical conductor connector 30 has been fixed to the section bar 50, it is possible to insert inside the lower seat 60 a light source, for example an LED strip and connect it to the electrical conductor 31 projecting from the end of the connector 30.

Then the lower seat 60 may be covered by engaging a screen 68 together with the coupling portion 66 of the lateral rib 62.

## Claims

1. A connection system for the quick fastening of a connector for electrical conductors comprising:
- a quick-fastening connection piece (10) comprising:
- a main body forming a through-channel (12), extending along a first axis (X-X),
- a connection mechanism for fastening a connector (30) of electrical conductors (31), and
- a coupling mechanism for the removable connection of the connection piece (10) to a support element (50),
the system further comprising a section bar (50) comprising:
- a central body (52) forming an elongated channel (54),
- a lower seat (60) extending longitudinally along the central body (52) and particularly suitable for receiving a light source, and
- an anchoring mechanism (70, 72) particularly suitable for engagement with the coupling mechanism of the connection piece (10) in any position along the entire longitudinal extension of the lower seat (60).

2. Connection system according to claim 1, **characterized in that** the connection mechanism comprises a thread (14) formed on the internal surface of the through-channel (12).

3. Connection system according to claim 1, **characterized in that** the coupling mechanism comprises a base (20) of the main body (10) having a substantially polygonal external profile, and an external surface comprising at least one chamfered angular portion (22, 23).

4. Connection system according to claim 1, **characterized in that** the anchoring mechanism comprises an extruded part (71) extending longitudinally along the central body (52) having a C-shaped structure in cross section, composed of a pair of lateral grooves (72) and an upper wall (70) of the lower seat (60).

5. Connection system according to claim 4, **characterized in that** the section bar (50) comprises an upper attachment portion (56, 58) particularly suitable for connecting the section bar (50) to a building structure.

6. Connection system according to claim 5, **characterized in that** the lower seat (60) is delimited by a pair of lateral ribs (62) arranged parallel to each other and particularly suitable for allowing the fixing of plasterboard sheets (64) to the section bar (50).

7. Connection system according to claim 6, **characterized in that** each lateral rib (62) comprises a coupling portion (66) particularly suitable for engagement with a protective element for protecting the light source and/or a diffusion element for diffusing the light emitted by the light source.

8. Connection system according to claim 4, **characterized in that** the upper wall (70) of the lower seat (60) comprises one or more through-openings (74) along the longitudinal extension of the section bar (50).
